# FASCICULE DE BREVET EUROPEEN

(11) **EP 1 541 975 B1**
(45) Date de publication et mention de la délivrance du brevet: **20.06.2007**
(21) Numéro de dépôt: 04292807.7
(22) Date de dépôt: 29.11.2004
(51) Int. Cl.: G01F 11/02, B01L 3/02

(54) **Pipette à main pour le prélèvement d'un échantillon liquide sans dérive de température**
Handpipette mit Temperaturausgleich
Hand-held pipette with temperature adjustment

(30) Priorité: 27.11.2003 FR 0313921
(43) Date de publication de la demande: 15.06.2005
(73) Titulaire: Gilson S.A.S., 95400 Villiers-le-Bel (FR)
(72) Inventeur: May, Yves-André, 78000 Versailles (FR); Viot, François, 95430 Auvers sur Oise (FR)
(74) Mandataire: Poulin, Gérard

(56) Documents cités:
- EP-A- 0 337 460
- EP-A- 1 250 956
- WO-A-97/02893
- US-A- 5 187 990
- US-B1- 6 232 129

## Description

L'invention concerne les pipettes à main.

On connaît du document EP-0 837 731 une pipette à main munie de deux capteurs de température mesurant la température de l'air circulant en partie inférieure de la pipette lors du prélèvement d'un échantillon liquide. Les valeurs de température relevées permettent de tenir compte de la température de l'air lors de la commande du mouvement du piston pour améliorer la précision du volume à prélever.

Toutefois, la précision de la mesure du volume s'avère en pratique encore insuffisante. De plus, la disposition des deux capteurs en partie inférieure de la pipette complique l'agencement de celle-ci.

Un but de l'invention est d'améliorer la précision de la mesure du volume à prélever en tenant compte des dérives de température.

A cet effet, on prévoit selon l'invention une pipette à main comprenant :
- une pièce ayant une partie de pièce interne, la pièce est une poignée et
- un capteur de température,
le capteur étant disposé pour mesurer une température de la partie interne.

Ainsi, le capteur permet de tenir compte de la température réelle de la pipette, par exemple de son réchauffement à la suite d'une manipulation prolongée par l'utilisateur. Cette donnée peut être prise en compte soit pour l'affichage d'une valeur de volume à prélever, soit pour la commande du piston, voire les deux à la fois. La connaissance de la température de pièces internes de la pipette telles que la vis, le corps ou d'autres composants, permet de corriger des écarts de course dus à la dilatation des pièces par exemple.

La pipette selon l'invention pourra présenter en outre au moins l'une quelconque des caractéristiques suivantes :
- le capteur est en contact avec une face interne de la pièce ;
- la pièce est fixe ;
- la pièce a une position réglable pour régler un volume à prélever ;
- la pièce a une partie s'étendant à l'extérieur de la pipette ;
- la pièce est destinée à être en contact avec une main d'un utilisateur ;
- il s'agit d'une pipette motorisée ; et
- il s'agit d'une pipette non motorisée.

On prévoit également selon l'invention un procédé d'affichage d'une valeur d'un volume d'un échantillon à prélever au moyen d'une pipette à main, comprenant les étapes consistant à :
- mesurer une température d'une partie de pièce interne d'une pièce de la pipette ; et
- afficher une valeur d'un volume à prélever en tenant compte de la mesure.

Le procédé selon l'invention pourra présenter en outre au moins l'une quelconque des caractéristiques suivantes :
- on détermine une valeur corrigée du volume à partir de la mesure et d'une valeur brute du volume ;
- on affiche la valeur corrigée ;
- on affiche la valeur brute ;
- en tenant compte de la mesure, on détermine si une valeur brute du volume est inférieure ou supérieure à une valeur corrigée du volume et on affiche un signe indiquant selon le cas l'infériorité ou la supériorité ; et
- on affiche le signe avec la valeur corrigée.

D'autres caractéristiques et avantages de l'invention apparaîtront encore dans la description suivante d'un mode préféré de réalisation et d'une variante donnée à titre d'exemples non limitatifs en référence aux dessins annexés sur lesquels :
- la figure 1 est une vue en coupe axiale longitudinale d'une pipette selon un mode préféré de réalisation de l'invention ;
- la figure 2 est une vue à plus grande échelle de la partie médiane de la pipette de la figure 1 ;
- la figure 3 est un organigramme montrant la prise en compte de la température lors du fonctionnement de la pipette ; et
- la figure 4 est un organigramme illustrant une variante du fonctionnement illustré à la figure 3.

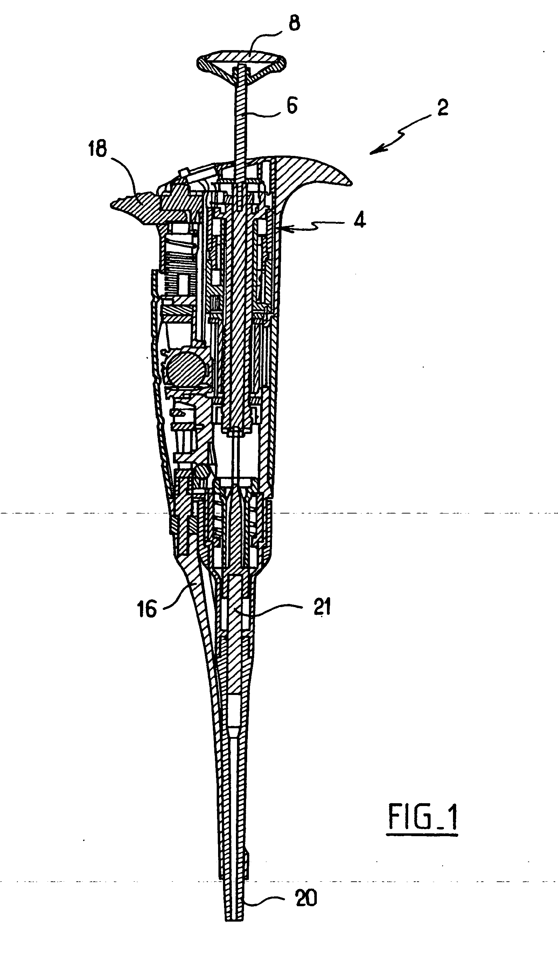

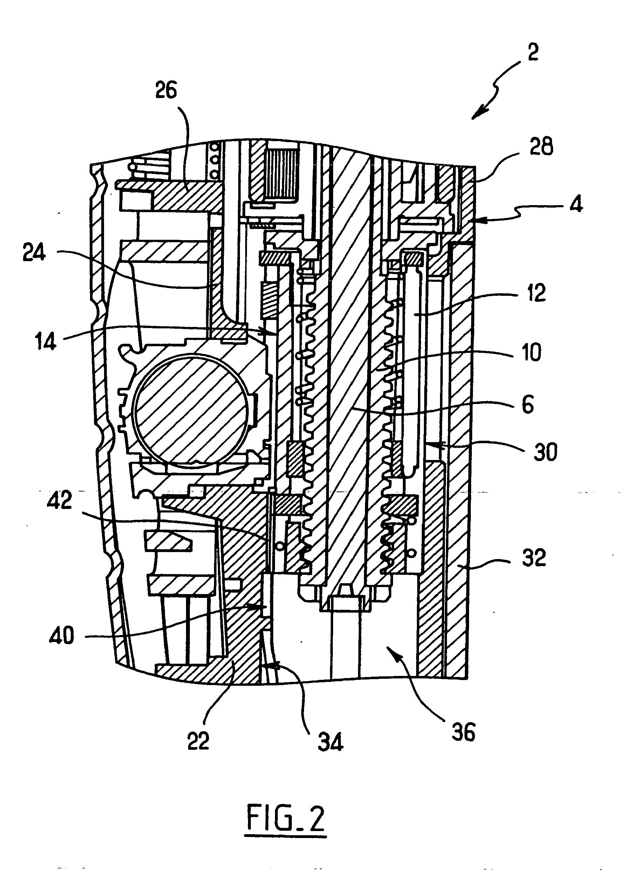

Nous allons décrire en référence aux figures 1 et 2 un mode préféré de réalisation d'une pipette selon l'invention.

Cette pipette est pour l'essentiel du type de celle qui a été décrite dans les documents WO 01/76747, WO 01/76748, WO 01/76749, WO 01/76750, WO 01/76751, WO 01/76752, WO 01/76753 et FR-2 807 344. Seules les caractéristiques relatives à l'invention et non décrites dans ces documents antérieurs seront donc présentées ici.

En résumé, la pipette 2 comprend un corps 4, une tige de commande 6 munie à son extrémité supérieure d'un bouton d'actionnement 8, une vis de réglage 10, un écran 12 à cristaux liquides pour l'affichage d'informations, notamment une valeur d'un volume à prélever, un circuit électronique 14 pour la commande de l'afficheur et de la pipette et un dispositif 16 comprenant un bouton 18 permettant l'éjection d'un cône amovible non représenté fixé à une extrémité inférieure 20 de la pipette d'une façon connue en elle-même. La tige 6 permet de commander un piston 21 pour l'aspiration dans le cône d'un échantillon liquide à prélever ou son rejet.

Le corps 4 est réalisé d'une seule pièce en matière plastique. Il comprend des parties internes 22, 24 et 26 ainsi que des parties externes telles que la partie 28. Le corps 4 est une pièce creuse fixe qui sert de référence de positionnement pour un grand nombre de pièces internes de la pipette, en particulier pour des pièces telles que la vis 10 dont la position est réglable par rapport au corps pour le réglage de la valeur du volume à prélever. Ainsi, un grand nombre de pièces de la pipette est directement ou indirectement fixé au corps 4. Le corps 4 présente une fenêtre 30 en partie arrière à travers laquelle est visible l'afficheur 12, fenêtre qui est elle-même recouverte d'une vitre 32 s'étendant au-delà de la fenêtre vers le haut et surtout vers le bas pour recouvrir en partie arrière de la pipette la partie interne 22 du corps. Le corps forme une poignée de la pipette et fait donc partie des pièces de la pipette directement en contact avec la main de l'utilisateur lors de la manipulation de la pipette.

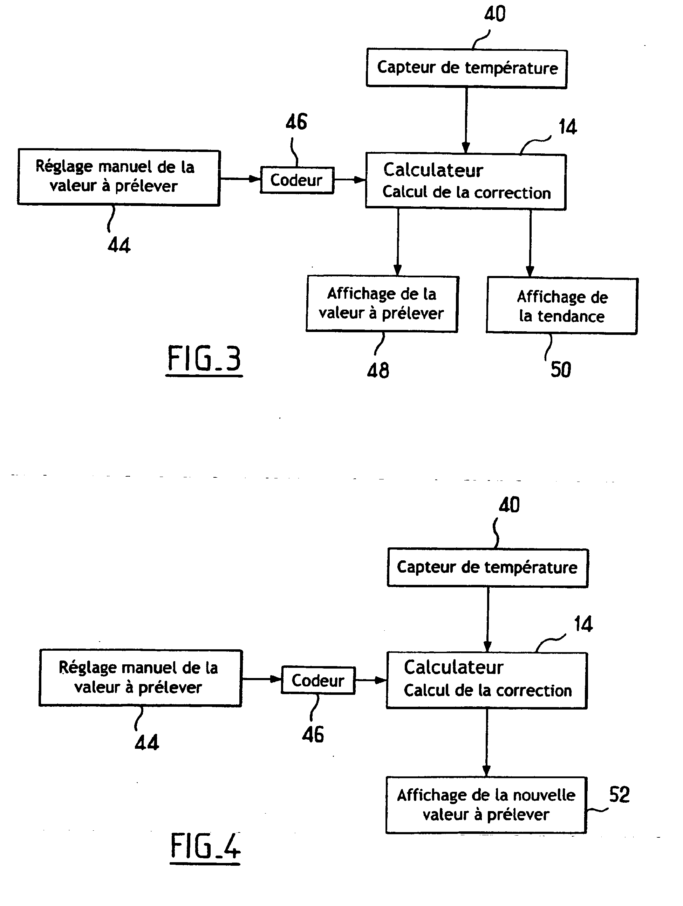

La partie interne 22 du corps 4 présente en particulier une face interne 34 délimitant une chambre 36 à l'intérieur de laquelle est mobile la tige 6 actionnant le piston 22. La pipette comprend une sonde de température 40 logée dans une cavité de la face interne 34 de la partie 22, dans la partie haute de la chambre 36. Le capteur constitué par la sonde 40 est agencé pour mesurer la température de la partie interne 22. On remarque qu'il est situé à proximité de la vis 10, de la tige 6, et du circuit électronique 14, ce dernier organe étant susceptible par lui-même de générer de la chaleur. La sonde de température est donc implantée à proximité des parties les plus soumises aux dilatations thermiques et permet de connaître la température des composants mécaniques entrant dans la chaîne de prélèvement. Le capteur 40 est relié par des fils de liaison électrique 42 au circuit électronique 14 pour la prise en compte par ce dernier de la valeur de température relevée par le capteur. Cette prise en compte s'effectue dans le présent exemple conformément à l'organigramme illustré à la figure 3.

Ainsi, dans une première étape, l'utilisateur règle manuellement, grâce aux commandes prévues à cet effet sur la pipette, la valeur nominale ou valeur brute du volume de l'échantillon liquide à prélever. Cette étape correspond au bloc 44 de la figure 3. Cette information est transcrite par un codeur 46 à destination du calculateur compris dans le circuit électronique 14. Par ailleurs, ce calculateur reçoit de la part du capteur 40 une information sur la température de la pièce interne 22.

Sachant que les spécifications de la pipette, en particulier pour le réglage de la valeur nominale du volume à prélever, sont données pour une pipette à 20°C, le calculateur détermine en fonction de la valeur de température fournie par le capteur 40 si une correction de cette valeur nominale est nécessaire. En effet, dans le cas par exemple où l'utilisateur manipule la pipette sur une durée prolongée, celle-ci s'échauffe au contact de la main de l'utilisateur de sorte que le calage cinématique de la pipette change en raison de la dilatation thermique de certaines pièces. Ce phénomène connu est appelé « Handwarming » ou réchauffage par la main.

A partir de la valeur de température fournie par le capteur, le calculateur détermine en fonction de matrices (telles que des tables) et/ou d'équations de correction prédéterminées d'une part si une correction de la valeur est nécessaire, et le cas échéant, la valeur corrigée à fournir. Ainsi, dans cet exemple, le calculateur commande l'affichage sur l'afficheur 12 d'une part de la valeur nominale du volume telle que commandée par l'utilisateur comme indiqué dans le bloc 48 de la figure 3, et d'autre part de la valeur de correction assortie d'un signe indiquant la tendance de la correction, comme indiqué par le bloc 50. Ce signe sera un signe « - » si, en présence d'une valeur de correction plus élevée que la valeur nominale, il existe un risque de sous-dosage, ou au contraire un signe « + » si, en présence d'une valeur de correction inférieure à la valeur nominale, il existe un risque de surdosage. En résumé, trois informations sont fournies sur l'afficheur 12 à l'utilisateur.

On pourra prévoir que le circuit électronique de la pipette est programmé de sorte que ce type de fonctionnement et d'affichage ne sera activé que lorsque la correction due à la température sera significative. Des valeurs prédéterminées pourront être choisies pour discriminer entre les circonstances de correction significative et les autres. Dans ce mode de fonctionnement, l'utilisateur peut donc ainsi régler sa pipette en fonction de la nouvelle indication fournie par le bloc 50 et tenir compte ainsi de la température de la pipette.

Une variante de fonctionnement est illustrée à la figure 4. Cette fois, à l'issue du réglage manuel de la valeur à prélever conformément au bloc 44 et de sa transcription par le codeur 46 en direction du calculateur 14, ce dernier tient compte de la valeur de température fournie par le capteur et affiche une unique valeur de correction conformément au bloc 52. Cette valeur de correction est déterminée par le calculateur en fonction de la valeur nominale demandée par l'utilisateur et de la valeur de température fournie par le capteur. L'utilisateur a donc une seule information qui est la valeur corrigée du volume à prélever. Ainsi, dans ce mode de fonctionnement, caractérisé par une correction automatique de l'affichage, l'affichage de la valeur de pipetage intègre automatiquement la correction. L'affichage évolue en fonction de la température et l'utilisateur n'a aucune modification à apporter. Le procédé de correction constitue donc un processus transparent pour l'utilisateur, c'est-à-dire que l'utilisateur ne voit pas se produire. L'utilisateur règle la pipette jusqu'à obtenir la valeur de volume souhaitée sur l'afficheur.

La pipette selon l'invention est donc rendue indépendante des échauffements divers tels que ceux qu'elle peut subir lors des différentes manipulations par l'utilisateur. On pallie ainsi les différentes dilatations du système mécanique qui occasionnent habituellement une dérive de la course de prélèvement, ce qui influe directement sur la quantité prélevée.

L'invention permet de conserver une même précision de volume sur une plus grande plage de température de fonctionnement de la pipette, par exemple une plage située entre 10 et 30°C.

Bien entendu, on pourra apporter à l'invention de nombreuses modifications sans sortir du cadre de celle-ci.

On a illustré dans ce qui précède la prise en compte par le calculateur 14 de l'information de température pour la correction de la valeur à afficher. On pourra prévoir que le calculateur prend en outre en compte d'autres paramètres tels que la pression atmosphérique ou encore le type de cône, en particulier le volume du cône fixé en partie inférieure de la pipette. Dans ce cas, la pipette pourra effectuer des corrections successives de la valeur de volume à afficher pour afficher la valeur finale. On pourra prévoir plus généralement que cette mesure de température est utilisée, lors de l'affichage d'une valeur de volume à prélever, pour la détermination à partir d'une valeur de volume brute d'une valeur de volume corrigée destinée à être affichée ou à servir de base pour la détermination d'une valeur de volume à afficher.

Dans le présent exemple, la pipette est une pipette à main non motorisée. On peut envisager d'appliquer l'invention à une pipette à main motorisée.

On pourra disposer le capteur de sorte qu'il mesure la température d'une pièce mobile à l'intérieur de la pipette dont la position par exemple est réglable pour ajuster le volume de l'échantillon liquide à prélever. Il pourra s'agir ainsi de la vis.

## Revendications

1. Pipette à main (2) comprenant :
- une poignée (4) destinée à être en contact avec une main d'un utilisateur, ayant une partie de pièce interne (22), et
- un capteur de température (40),
**caractérisée en ce que** le capteur est disposé pour mesurer une température de la partie de pièce interne (22) .

2. Pipette selon la revendication précédente, **caractérisée en ce que** le capteur (40) est en contact avec une face interne (34) de la pièce.

3. Pipette selon l'une quelconque des revendications précédentes, **caractérisée en ce que** la poignée (4) est fixe.

4. Pipette selon l'une quelconque des revendications 1 à 2, **caractérisée en ce que** la pièce a une position réglable pour régler un volume à prélever.

5. Pipette selon l'une quelconque des revendications précédentes, **caractérisée en ce que** la poignée (4) a une partie (28) s'étendant à l'extérieur de la pipette.

6. Pipette selon l'une quelconque des revendications précédentes, **caractérisée en ce qu**'il s'agit d'une pipette motorisée.

7. Pipette selon l'une quelconque des revendications 1 à 5, **caractérisée en ce qu**'il s'agit d'une pipette non motorisée.

8. Procédé d'affichage d'une valeur d'un volume d'un échantillon à prélever au moyen d'une pipette à main (2), comprenant les étapes consistant à :
- mesurer une température interne de la pipette ; et
- afficher une valeur d'un volume à prélever en tenant compte de la mesure,
**caractérisé en ce que** ladite température interne est la température d'une partie de pièce interne (22) d'une poignée (4) de la pipette destinée à être au contact avec une main d'un utilisateur.

9. Procédé selon la revendication précédente, **caractérise en ce qu**'on détermine une valeur corrigée du volume à partir de la mesure et d'une valeur brute du volume.

10. Procédé selon la revendication précédente, **caractérisé en ce qu**'on affiche la valeur corrigée.

11. Procédé selon l'une quelconque des revendications 9 ou 10, **caractérisé en ce qu**'on affiche la valeur brute.

12. Procédé selon l'une quelconque des revendications 8 à 11, **caractérisé en ce que,** en tenant compte de la mesure, on détermine si une valeur brute du volume est inférieure ou supérieure à une valeur corrigée du volume et on affiche un signe indiquant selon le cas l'infériorité ou la supériorité.

13. Procédé selon la revendication précédente, **caractérisé en ce qu**'on affiche le signe avec la valeur corrigée.

## Claims

1. A hand-held pipette (2) comprising:
· a handle (4) intended to come into contact with a hand of a user and having an internal portion (22) and
· a temperature sensor (40),
**characterized in that** the sensor is intended to measure a temperature of the internal portion (22).

2. A pipette according to the preceding claim, **characterized in that** the sensor (40) is in contact with an inside face (34) of the part.

3. A pipette according to either of the preceding claims, **characterized in that** the handle (4) is stationary.

4. A pipette according to either of the claims 1 or 2, **characterized in that** the part has an adjustable position for adjusting the volume to be taken.

5. A pipette according to any ane of the preceding claims, **characterized in that** the handle (4) has a portion (28) extending outside the pipette.

6. A pipette according to any one of the preceding claims, **characterized in that** the pipette is a motor-driven pipette.

7. A pipette according to any ane of the claims 1 to 5, **characterized in that** the pipette is not a motor-driven pipette.

8. A method of displaying a value for a volume of a sample to be taken by means of a hand-held pipette (2), comprising the steps consisting in:
· measuring a temperature within the pipette; and
· displaying a value of a volume to be taken, taking the measurement into account,
**characterized in that** said internal temperature is the temperature of an internal portion (22) of a handle (4) of the pipette intended to come into contact with a hand of a user.

9. A method according to the preceding claim, **characterized in that** a corrected value for the volume is determined from the measurement and a raw volume value.

10. A method according to the preceding claim, **characterized in that** the corrected value is displayed.

11. A method according to either of the claims 9 or 10, **characterized in that** the raw value is displayed.

12. A method according to any one of claims 8 to 11, **characterized in that**, while taking account of the measurement, it is determined whether the raw value for the volume is less than or greater than a corrected value for the volume and a sign is displayed indicating less than or greater than, depending on circumstances.

13. A method according to the preceding claim, **characterized in that** the sign is displayed together with the corrected value.

## Patentansprüche

1. Handpipette (2), enthaltend:
- einen Griff (4), der dazu bestimmt ist, mit der Hand eines Benutzers in Kontakt zu stehen, und einen Innenteilabschnitt (22) aufweist, und
- einen Temperaturmessfühler (40),
**dadurch gekennzeichnet, dass** der Messfühler dazu vorgesehen ist, eine Temperatur des Innenteilabschnitts (22) zu messen.

2. Pipette nach dem vorangehenden Anspruch, **dadurch gekennzeichnet, dass** der Messfühler (40) mit einer Innenseite (34) des Teils in Kontakt steht.

3. Pipette nach einem der vorangehenden Ansprüche, **dadurch gekennzeichnet, dass** der Griff (4) fest ist.

4. Pipette nach einem der Ansprüche 1 und 2, **dadurch gekennzeichnet, dass** das Teil in seiner Position einstellbar ist, um ein zu entnehmendes Volumen einzustellen.

5. Pipette nach einem der vorangehenden Ansprüche, **dadurch gekennzeichnet, dass** der Griff (4) einen Abschnitt (28) aufweist, der sich außerhalb der Pipette erstreckt.

6. Pipette nach einem der vorangehenden Ansprüche, **dadurch gekennzeichnet, dass** es sich um eine motorisierte Pipette handelt.

7. Pipette nach einem der Ansprüche 1 bis 5, **dadurch gekennzeichnet, dass** es sich um eine nicht motorisierte Pipette handelt.

8. Verfahren zum Anzeigen eines Volumenwertes einer mittels einer Handpipette (2) zu entnehmenden Probe, das folgende Schritte umfasst:
- Messen einer Innentemperatur der Pipette, und
- Anzeigen eines Wertes eines zu entnehmenden Volumens unter Berücksichtigung der Messung,
**dadurch gekennzeichnet, dass** die Innentemperatur die Temperatur eines Innenteilabschnitts (22) eines Griffs (4) der Pipette ist, der dazu bestimmt ist, mit der Hand eines Benutzers in Kontakt zu stehen.

9. Verfahren nach dem vorangehenden Anspruch, **dadurch gekennzeichnet, dass** ausgehend von der Messung und von einem Volumenbruttowert ein korrigierter Volumenwert bestimmt wird.

10. Verfahren nach dem vorangehenden Anspruch, **dadurch gekennzeichnet, dass** der korrigierte Wert angezeigt wird.

11. Verfahren nach einem der Ansprüche 9 oder 10, **dadurch gekennzeichnet, dass** der Bruttowert angezeigt wird.

12. Verfahren nach einem der Ansprüche 8 bis 11, **dadurch gekennzeichnet, dass** unter Berücksichtigung der Messung bestimmt wird, ob ein Volumenbruttowert unter oder über einem korrigierten Volumenwert liegt, und ein Vorzeichen angezeigt wird, das je nach Fall die Minder- bzw. Höherwertigkeit angibt.

13. Verfahren nach dem vorangehenden Anspruch, **dadurch gekennzeichnet, dass** das Vorzeichen mit dem korrigierten Wert angezeigt wird.
